# EUROPÄISCHE PATENTSCHRIFT

(11) **EP 1 346 521 B1**
(45) Veröffentlichungstag und Bekanntmachung des Hinweises auf die Patenterteilung: **02.11.2005**
(21) Anmeldenummer: 01271717.9
(22) Anmeldetag: 24.10.2001
(51) Int. Cl.: H04L 12/28, H04L 12/56, H04L 12/64, H04L 12/24, G06F 13/18

(54) **VERFAHREN ZUR STEUERUNG VON VERBINDUNGEN IN EINEM KOMMUNIKATIONSSYSTEM SOWIE KOMMUNIKATIONSSYSTEMS HIERZU**
METHOD FOR CONTROLLING LINKS IN A COMMUNICATION SYSTEM AND CORRESPONDING COMMUNICATION SYSTEM
PROCEDE POUR COMMANDER DES LIAISONS DANS UN SYSTEME DE COMMUNICATION ET SYSTEME DE COMMUNICATION MIS EN OEUVRE A CETTE FIN

(30) Priorität: 19.12.2000 DE 10063390
(43) Veröffentlichungstag der Anmeldung: 24.09.2003
(73) Patentinhaber: ROBERT BOSCH GMBH, 70442 Stuttgart (DE)
(72) Erfinder: VOLLMER, Vasco, 31188 Holle (DE); HOFMANN, Matthias, 01705 Freital (DE)
(86) Internationale Anmeldenummer: PCT/DE2001/004044
(87) Internationale Veröffentlichungsnummer: WO 2002/051073

(56) Entgegenhaltungen:
- EP-A- 0 391 792
- EP-A- 0 971 509
- WO-A-98/51060
- DE-A- 19 853 665
- FR-A- 2 779 595
- "The HAVi Specification: Specification of the Home Audio/Video Interoperabilty (HAVi) Architecture" HAVI SPECIFICATION, XX, XX, 19. November 1998 (1998-11-19), Seiten 1-384, XP002116332 in der Anmeldung erwähnt

## Beschreibung

### Stand der Technik

Die Erfindung geht aus von einem Verfahren zur Steuerung von Verbindungen in einem Kommunikationssystem.

Aus dem IEEE-Standard 1394 [1] ist ein serielles Bussystem bekannt, bei dem verschiedene Endgeräte (Knoten) entweder über ein 4-6-adriges Kabel oder einen Lichtwellenleiter angeschlossen werden. Mindestens ein Knoten kann dabei derart ausgeführt sein, dass er zusätzliche Verwaltungsfunktionen für das Netzwerk übernehmen kann (Busmanagement).

Neben obigem Standard gibt es eine busunabhängige Erweiterung, die unter dem Namen HAVi (Home Audio Video interoperability) [2] spezifiziert ist. Diese HAVi-Spezifikation beschreibt insbesondere die Femkontrolle von Geräten unter Verwendung eines Ressourcen -Managers, der eine Ressource (Gerät) auf Anforderung belegt und sie auch wieder freigibt.

Aus der WO 98 51 060 A ist ein Verfahren zur Steuerung von Verbindungen in einem Kommunikationssystem bekannt, bei dem bei einem Verbindungswunsch eine Nachricht gesendet wird, die eine Information über das Übertragungsformat der gewünschten Verbindung enthält. Dort wird ermittelt, ob für dieses Übertragungsformat ausreichend Übertragungskapazität zur Verfügung steht. Falls nicht, wird eine Verbindung mit niedrigerer Priorität als die gewünschte beendet und die gewünschte Verbindung aufgebaut.

Der HAVi-Standard [2] sieht vor, dass eine Anforderung von Übertragungskapazität, die aufgrund der aktuellen Buslast nicht erfüllt werden kann, abgewiesen wird.

### Vorteile der Erfindung

Mit den in den Ansprüchen 1 und 10 aufgezeigten Maßnahmen können wichtige Informationen auch dann übermittelt werden, wenn das Kommunikationssystem durch andere Datenübertragungen, die für die neue Verbindung mit der wichtigen Information notwendige Bandbreite nicht zur Verfügung stellen kann.

Eine oder mehrere bestehende aktive Verbindungen werden beendet oder geparkt, wenn das ihnen zugeordnete Prioritätsattribut eine geringere Wertigkeit hat als das der gewünschten Verbindung.

Bei einem Verbindungswunsch wird eine Nachricht gesendet, die eine Information über das Übertragungsformat, wie z. B. Bandbreite, Verbindungstyp, der gewünschten Verbindung enthält,
- es wird ermittelt, ob für dieses Übertragungsformat ausreichend Übertragungskapazität zur Verfügung steht,
- falls nicht, wird anhand von Verbindungsdaten und Prioritätsattributen geprüft, ob mindestens eine Verbindung besteht, der ein niedrigeres Prioritätsattribut zugeteilt ist als der gewünschten Verbindung,
- in letzterem Falle wird die Übertragung von Daten für jene Verbindung/en gestoppt, die das niedrigere Prioritätsattribut aufweist/aufweisen und die gewünschte Verbindung aufgebaut.

Ein Kommunikationssystem nach der Erfindung kann insbesondere ein Bussystem für den Datentausch zwischen Ressourcen eines Kraftfahrzeuges sein mit Systemelementen, die Mittel aufweisen zum Aufbau von Kommunikationsverbindungen über das Bussystem und mit einem übergeordneten Systemelement, welches eingerichtet ist für folgende Systemfunktionen:
- zu prüfen, ob im Bussystem ausreichend Übertragungskapazität zur Verfügung steht,
- Verbindungsdaten und Prioritätsattribute von Systemelementen zu sammeln,
- Verbindungsdaten und Prioritätsattribute der Systemelemente daraufhin auszuwerten, ob eine gewünschte Verbindung eines Übertragungsformates mit einem vorgegebenen Prioritätsattribut aufgebaut werden kann zu Ungunsten von aktiven Verbindungen im Kommunikationssystem mit niedrigerem Prioritätsattribut.

Nach den Ansprüchen 2 und 3 ist es besonders vorteilhaft, Verbindungen mit niedrigerem Prioritätsattribut nicht zu beenden, sondern lediglich die dazugehörige Datenübertragung temporär zu stoppen, bis die Verbindung mit dem höheren Prioritätsattribut beendet ist. Durch diese Maßnahmen kann die unterbrochene Verbindung unverzögert fortgesetzt werden und es muss nicht erneut ein Verbindungsaufbau initiiert werden.

Gemäss Anspruch 4 können inzwischen aufgelaufene Daten zwischengespeichert werden und nach der Freigabe der Verbindung mit niedrigerem Prioritätsattribut zuerst gesendet werden. Durch diese Maßnahme entsteht kein Datenverlust während der Zeit in der die Verbindung mit dem höheren Prioritätsattribut den Vorrang hat.

Nach Anspruch 5 ist es vorteilhaft, den Softwareelementen des Kommunikationssystems selbst Prioritätsattribute zuzuordnen. Wenn dann noch gemäss Anspruch 6 diese den Softwareelementen zugeordneten Prioritätsattribute zumindest bezüglich ihres Prioritätsranges auch den Verbindungen zugeteilt werden, können die in der DE-Patentanmeldung 100 40 012.4 aufgezeigten Vorteile, wie Einsparen von häufigen manuellen Eingaben, zusätzlich genutzt werden.

Durch das Speichern der Prioritätsattribute der Softwareelemente und/oder Verbindungen zusammen mit den Verbindungsdaten gemäss Anspruch 7 ist eine schnelle Auswertung und Entscheidung zu Gunsten von Verbindungen mit hohem Prioritätsattribut möglich. Dies gilt ebenso für die Maßnahmen der Ansprüche 8 und 9.

Das Kommunikationssystem nach Anspruch 10 kann vorteilhaft durch die Maßnahmen des Anspruchs 11 weitergebildet werden, dadurch, dass das übergeordnete Softwareelement eingerichtet ist die Datenübertragung aktiver Verbindungen mit niedrigerem Prioritätsattribut temporär zu stoppen, bis eine Verbindung mit höherem Prioritätsattribut beendet ist.

### Zeichnungen

Anhand der Zeichnungen werden Ausführungsbeispiele der Erfindung näher erläutert. Es zeigen
- Figur 1: die Netztopologie eines Kommunikationssystems, das der Erfindung zugrundeliegt,
- Figur 2: den Ablauf des prioritätsbasierten Verbindungsmanagements nach der Erfindung.

### Beschreibung von Ausführungsbeispielen

Die Erfindung wird anhand des seriellen Bussystems gemäss dem IEEE-Standard 1394 [1] erläutert, wobei auch auf die Erweiterung gemäss HAVi-Spezifikation [2] Bezug genommen wird. Vor der eigentlichen Erläuterung der Erfindung wird zum besseren Verständnis auf den IEEE-Standard 1394 und die HAVi-Spezifikation eingegangen.

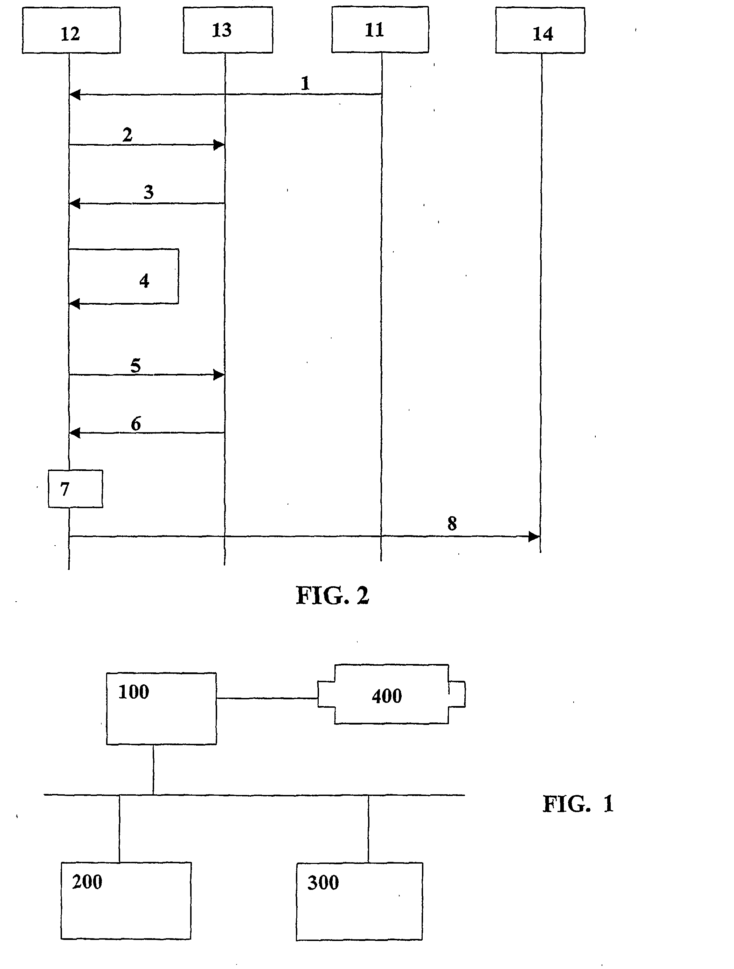

Die verschiedenen Endgeräte (Knoten) sind nach Figur 1 entweder über ein 4-6-adriges Kabel oder einen Lichtwellenleiter 1 angeschlossen. Dabei kann ein Knoten wahlweise als Endstück (Blatt) 400 oder als Relaisknoten (Zweig) 200, 300 ausgeführt sein. Der oberste Knoten wird als Wurzel 100 bezeichnet. Durch den Einsatz der verschiedenen Knotentypen kann eine geeignete Topologie des Netzes aufgebaut werden. Ein Blatt empfängt dabei Informationspakete und verarbeitet sie, falls die Zieladresse des Paketes mit der eigenen übereinstimmt. Ein Zweig muss zusätzlich alle Pakete, die er auf einem Port empfängt, auf allen anderen Ports aussenden.

IEEE 1394 sieht vor, dass das Netzwerk selbskonfigurierend ist, d. h. nach dem Einschalten oder nach einem Reset senden alle Knoten einige ausgewählte Informationen über sich selbst ins Netz. Diese Information wird dabei von allen Knoten empfangen. Ein Knoten kann dabei in der Art ausgeführt sein, dass er zusätzliche Verwaltungsfunktionen für das Netzwerk übernehmen kann (Busmanagement). Dazu sammelt er alle Informationen der anderen Knoten, verarbeitet sie und speichert sie intern geeignet ab. Sollten mehrere Knoten Busmanagementfähigkeiten besitzen, gibt es ein Konkurrenzverfahren, aus dem ein Knoten als Sieger hervorgeht, der dann das Busmanagement übernimmt.

Neben dem Verfahren, wie sie in den Spezifikationen zu IEEE 1394 beschrieben sind, gibt es die busunabhängige Erweiterung HAVi, die für den Einsatz in einem IEEE 1394-Netzwerk geeignet ist. Insbesondere die Fernkontrolle von Geräten von jedem anderen Punkt im Netzwerk wird in der HAVi-Spezifikation beschrieben. Dazu ist ein verteiltes Modell beschrieben, bei dem die Steuerung der Geräte über Kontrollmodule, sogenannte "Device Control Moduls (DCM)" vorgenommen wird. Diese DCM laufen als Softwareelement auf dem Gerät, das Kontrollfunktionen auf einem anderen Gerät ausführen will. Dabei ist ein DCM jeweils spezifisch für ein bestimmtes Gerät oder eine Geräteklasse. Eine weitere Gruppe von Softwareelementen stellen die "Functional Component Modules" dar, von denen jeweils mehrere hierarchisch unterhalb eines DCM angeordnet werden können und die für die Kontrolle jeweils eines spezifischen funktionalen Teils eines Gerätes zuständig sind.

Eine wesentliche Anforderung an ein solches System ist die durchgängige Behandlung von kollidierenden Gerätezugriffen, d. h. die Behandlung von zwei oder mehr gleichzeitigen Belegungsanforderungen auf ein Gerät. Dabei kann zwischen solchen Geräten unterschieden werden, die mehr als einen Zugriff erlauben, z. B. DAB-Tuner und solchen, die jeweils nur einen Zugriff gestatten, z. B. Lautsprecher. Der HAVi-Standard sieht einen oder mehrere Ressourcen-Manager 400 vor, die eine Ressource (Gerät) 100, 200, 300 auf Anforderung belegen und sie auch wieder freigeben. Im Sprachgebrauch von HAVi gibt es sogenannte Contender, damit werden Softwareelemente bezeichnet, die einen Zugriff auf eine oder mehrere Ressourcen anfordern. Außerdem gibt es Clients, entsprechend sind die Softwareelemente, die derzeit eine Ressource mit einem Zugriff belegt haben - nach einer erfolgreichen Anforderung wird also ein Contender zu einem Client.

Mit der Reservierung einer Ressource erhält ein Client die Berechtigung, diese zu nutzen. Im Allgemeinen wird dazu aber zusätzlich Datenübertragungskapazität auf dem Bus benötigt. Diese Buskapazität wird von den,sogenannten Streammanagern verwaltet. Ein Streammanager ist insbesondere ein übergeordnetes Softwareelement, das auf Anforderung eines anderen Softwareelementes hin einen Kanal mit der angeforderten Datenrate und den angeforderten Verbindungseigenschaften von einer Quelle zu einem Ziel aufbaut. Wenn nicht ausreichend freie Datenrate zur Verfügung steht, um die Neuanforderung zu erfüllen, wird die Anfrage bei der HAVi-Spezifikation abgelehnt.

Die nachfolgend verwendeten Begriffe werden zum besseren Verständnis hier kurz erläutert:
- Softwareelement (SE): jede Softwarekomponente in einem HAVi-System, also alle Systemkomponenten, Applikationen und Treiber werden als Softwareelemente bezeichnet.
- Registry (Speicher): die Registry beinhaltet Informationen über jedes im Netzwerk verfügbares Softwareelement und jedes verfügbare Gerät. Informationen über die einzelnen Softwareelemente werden dabei in Attributen abgelegt. Zusätzlich zu den vordefinierten Attributen, ist es möglich, weitere hinzuzufügen. Die Architektur der Registry ist ein verteiltes System, d. h. jedes Gerät kann einen Teil der gesamten Registry beinhalten, sie kann aber auch zentral gehalten werden. Für den Zugriff auf die Registry ist dies unsichtbar, da die verschiedenen Instanzen der Registry innerhalb des Netzwerkes gegebenenfalls die angeforderten Informationen selbständig austauschen.
- Streammanager (SM): der Streammanager dient dem Auf- und dem Abbau und der Verwaltung von Verbindungen zwischen Softwareelementen und/oder Geräten. Der Streammanager kann wie die Registry als verteiltes System aufgebaut sein. Dabei dienen spezielle Befehle dazu, den Zustand aller Streammanager oder eines bestimmten Streammanagers zu erhalten.
- Softwareelement-Identifier (SEID): der Softwareelement-Identifier dient als eindeutige Kennung eines Softwareelementes. Mit Hilfe des Softwareelement-Identifiers wird ein bestimmtes Softwareelement adressiert. Der Softwareelement-Identifier hat eine Länge von 80 Bit und beinhaltet die eindeutige Gerätekennung (GUID, 64 Bit) und einen sogenannten Softwarehandle (16 Bit), mit dem ein Softwareelement innerhalb eines Gerätes identifiziert wird.
- Functional Control Modul (FCM): ein Functional Control Modul ist ein Softwareelement mit dem eine funktionale Einheit eines Gerätes, z. B. ein CD-Laufwerk oder ein UKW-Tuner angesteuert wird.

Das erfindungsgemäße Verfahren geht aus von einem Netzwerk oder Kommunikationssystem für die Anwendung in Fahrzeugen. Eine wesentliche Anforderung für den Einsatz im Fahrzeug, ist eine durchgängige und vorhersagbare Behandlung von hochprioren Anforderungen auf Ressourcen (Geräte und Datenübertragung). Der bestehende HAVi-Standard [2] sieht vor, dass eine Anforderung, die aufgrund der aktuellen oder geplanten Buslast nicht erfüllt werden kann, abgewiesen wird. Da im Fahrzeug wichtige Meldungen wie Fehlerwarnungen oder Fahrhinweise übermittelt werden müssen, ist der Einsatz eines prioritätsbasierten Verbindungsmanagements vorteilhaft. Das erfindungsgemäße Verfahren arbeitet dazu in besonders vorteilhafter Weise mit dem in [3] beschriebenen Verfahren zusammen. Die dort beschriebene Priorisierung von Zugriffen auf Geräte werden in entsprechender Weise für die Priorisierung von Verbindungen genutzt. Dabei erhält eine Verbindung die gleiche Priorität, die dem initiierenden Softwareelement zugeordnet ist.

Die mit einem Softwareelement, z. B. einer Applikation oder einem FCM, verbundene Priorität wird in einem Attribut in der Registry gespeichert und kann dort mit Hilfe einer Anfrage an die Registry ausgelesen werden (Registry:: GetELMENT). Die in der Registry eingetragenen Attribute haben das Format ATT_XXXX, wobei XXXX für einen aussagekräftigen Namen des Attributes steht. In der Folge wird für das Attribut der Priorität die Bezeichnung ATT_Priority verwendet, denkbar ist aber auch eine andere Bezeichnung, die dem grundsätzlichen Format folgt. Jedem Attribut ist ein Wert aus einem 32-Bit-Bereich zugeordnet. Dabei ist dieser Bereich im HAVi-Standard so aufgeteilt, dass der Bereich hex0000 0000 bis hex7fff fff für Systemattribute reserviert ist, während der übrige Bereich (hex8000 0000 bis hexffff ffff) zur prioritären Erweiterung dient. Da das Attribut für die Priorität nicht im HAVi-Standard als Systemattribut definiert ist, sollte dafür ein Wert aus dem oberen Bereich verwendet werden, z. B. hex8000 0000.

Für die Suche nach Softwareelementen mit einem bestimmten Attribut werden die Funktionsaufrufe Registry::GetELEMENT und Registry::Multiple GetELEMENT verwendet. Dabei kann nach einem oder mehreren Attribut-Bezeichnern, z. B. ATT_Priority und den unter diesen Bezeichner eingetragenen Wert gesucht werden. Die Funktionen geben dann jeweils eine Liste der SEID der Softwareelemente zurück, auf die die übergebenen Suchkriterien passen. Wenn statt dessen die SEID eines Softwareelementes bekannt ist, kann über den Aufruf Registry::RetrieveElement der dazu gespeicherte Satz an Attributen abgerufen werden.

Das erfindungsgemäße Verfahren gemäss Figur 2 geht aus von einem Contender 11, der seine Verbindung zu einem Gerät oder einem anderen Softwareelement anfordert. Dazu sendet er den Aufruf 1 Streammanager::FlowTo an den Datenstrommanager (Streammanager) 12. Dieser Aufruf beinhaltet die Quelle und Senke und eine Struktur, die einige Informationen über das Übertragungsformat, wie Bandbreite und Verbindungstypen, enthalten. Mit Hilfe dieser Informationen ermittelt der Streammanager 12, ob das Bussystem in der Lage ist, den angeforderten Datenstrom zu tragen, d. h. ob ausreichend Bandbreite vom angeforderten Typ zur Verfügung steht. Wenn dies der Fall ist, wird die entsprechende Verbindung aufgebaut und ein Verbindungsidentifier an das anrufende Softwareelement zurückgegeben. Wenn nicht ausreichend Bandbreite zur Verfügung steht, um die Anforderung zu erfüllen, sieht der HAVi-Standard eine Abweisung der Anforderung vor. Ein nach dem erfindungsgemäßen Verfahren arbeitender Streammanager 12 hingegen stellt eine Anfrage RetrieveElement 2 an die Registry 13, um den Wert des Attributes ATT_Priority des aufrufenden Softwareelements zu ermitteln. Diese Anfrage 2 wird von der Registry 13 mit der Antwort 3 beantwortet. Anschließend sammelt der Streammanager 12 Informationen über alle oder ausgewählte im Netz aktive Verbindungen (Funktion: Streammanager::Get Global Connection Map) 4. Anhand eines internen Verfahrens wählt der Streammanager eine, mehrere oder alle Softwareelemente aus, die aktive Verbindungen haben und fragt (Anfrage 5) in der Registry 13 für diese Softwareelemente (Clients) 14 die entsprechende Priorität ab (Registry:: RetrieveElement). Diese Anfrage wird mit der Rückmeldung 6 von den Lients 14 beantwortet. Mit Hilfe der Verbindungsdaten und den Prioritäten der Softwareelemente (Clients) 14 wählt der Streammanager 12 diejenigen aus, die eine geringere Priorität und passende Verbindungen im Hinblick auf Verbindungstyp und Datenrate haben. Diese so ermittelten Verbindungen werden dann beendet (7) und es wird den betroffenen Clients 14 mitgeteilt, dass ihre Datenübertragung gestoppt wird (8), um die entsprechende Bandbreite für die höherpriore Verbindung bereitzustellen.

Folgende Beispiele, die anhand der Topologie des Kommunikationssystems nach Figur 2 erklärt werden, sollen diesen Verfahrensablauf verdeutlichen. Dabei bezeichnen 100, 200 und 300 Geräte im Kommunikationssystem und 400 einen Streammanager. Die Geräte 200 und 300 unterhalten eine vom Gerät 300 aufgebaute Verbindung mit niedriger Priorität, die die gesamte Verbindungskapazität des Netzwerkes belegt. Das Gerät 100 versucht nun mit Hilfe des Streammanagers 400 eine Verbindung zum Gerät 200 aufzubauen. Der Streammanager 400 ermittelt die verfügbare Bandbreite (keine). Die Abfrage der Priorität vom Gerät 100 in der Registry 13 ergibt den relativ hohen Wert 3. Außerdem stellt der Streammanager 400 eine Liste der aktiven Verbindungen zusammen. Aus dieser Liste ist der Initiator der aktiven Verbindung zu erkennen (Gerät 300). Die Abfrage der Priorität von Gerät 300 ergibt die niedrigere Priorität 5. Darauf entscheidet der Streammanager 400 die Verbindung zwischen Gerät 300 und Gerät 200 zu beenden. Dazu sendet er eine Mitteilung in der der Abbruch der Verbindung gemeldet wird. Danach stehen unmittelbar alle mit dieser Verbindung in Zusammenhang stehenden Ressourcen wieder zur Verfügung und der Streammanager 400 meldet dem Gerät 100 den erfolgreichen Verbindungsaufbau und übermittelt eine Verbindungskennnummer.

In einem weiteren Beispiel wird wieder von der Topologie gemäss Figur 2 ausgegangen. Diesmal sind jedoch sowohl die Geräte 200 und 300 als auch der Streammanager 400 in der Lage, eine Verbindung zu parken, d. h. temporär zu unterbrechen und später fortzusetzen. Dadurch führt die höherpriore Anforderung von Gerät 100 nicht zu einem Abbruch der Verbindung vom Gerät 300 zum Gerät 200, sondern der Streammanager 400 teilt den Beteiligten mit, dass die Verbindung geparkt wird. Nach der Freigabe der Ressourcen durch Gerät 100, teilt der Streammanager 400 den Geräten 200 und 300 mit, dass die Verbindung wieder aktiviert werden kann. Die während des Parkens aufgelaufenen Daten können zwischengespeichert werden, um sie nach Beendigung der Verbindung mit höherem Prioritätsattribut zuerst zu senden.

Insbesondere zum Durchführen des Verfahrens nach der Erfindung sind die Systemelemente 100, 200, 300; 11, 13, 14 mit Mitteln ausgestattet zum Aufbau von Kommunikationsverbindungen über das Bussystem. Ein übergeordnetes Systemelement (Datenstrommanager oder Streammanager) 12 beziehungsweise 400 ist eingerichtet für folgende Systemfunktionen:
- zu prüfen, ob im Bussystem ausreichend Übertragungskapazität zur Verfügung steht,
- Verbindungsdaten und Prioritätsattribute von Systemelementen zu sammeln,
- Verbindungsdaten und Prioritätsattribute der Systemelemente 100, 200, 300 beziehungsweise 11, 13, 14 daraufhin auszuwerten, ob eine gewünschte Verbindung eines Übertragungsformates mit einem vorgegebenen Prioritätsattribut aufgebaut werden kann zu Ungunsten von aktiven Verbindungen im Kommunikationssystem mit niedrigerem Prioritätsattribut.

In einer Weiterbildung kann das übergeordnete Systemelement 12, 400 eingerichtet sein, die Datenübertragung aktiver Verbindungen mit niedrigerem Prioritätsattribut temporär zu stoppen, bis eine Verbindung mit höherem Prioritätsattribut beendet ist.

### Literatur:

[1] IEEE, "P1394a Draft for a High Performance Serial Bus (Supplement)"
[2] HAVi Organization, "The HAVi Specification 1.0"
[3] DE P10040012.4

## Patentansprüche

1. Verfahren zur Steuerung von Verbindungen in einem Kommunikationssystem, insbesondere Bussystem, mit folgenden Schritten:
- bei einem Verbindungswunsch wird eine Nachricht gesendet (1), die eine Information über das Übertragungsformat, wie z. B. Bandbreite, Verbindungstyp, der gewünschten Verbindung enthält,
- es wird ermittelt, ob für dieses Übertragungsformat ausreichend Übertragungskapazität zur Verfügung steht (12),
- falls nicht, wird anhand von Verbindungsdaten und Prioritätsattributen geprüft, ob mindestens eine Verbindung besteht, der ein niedrigeres Prioritätsattribut zugeteilt ist als der gewünschten Verbindung (5, 6),
- in letzterem Falle wird die Übertragung von Daten für jene Verbindung/en gestoppt (8), die das/die niedrigere/n Prioritätsattribut/e aufweist/aufweisen und die gewünschte Verbindung aufgebaut,
**dadurch gekennzeichnet, daß**
- die Verbindung/en mit niedrigerem/niedrigeren Prioritätsattribut/en wird/werden nicht beendet, sondern es wird lediglich die dazugehörige Datenübertragung temporär gestoppt, bis die Verbindung mit dem höheren Prioritätsattribut beendet ist.

2. Verfahren nach Anspruch 1, **dadurch gekennzeichnet, dass** nach Beendigung der Verbindung mit dem höheren Prioritätsattribut die Datenübertragung für die gestoppte Verbindung/en mit einem niedrigeren Prioritätsattribut fortgesetzt wird/werden.

3. Verfahren nach Anspruch 1 und 2, **dadurch gekennzeichnet, dass** die im Zeitraum zwischen dem Stoppen und dem Fortsetzen der Datenübertragung aufgelaufenen Daten zwischengespeichert werden und bei Fortsetzen der Datenübertragung insbesondere zuerst gesendet werden.

4. Verfahren nach einem der Ansprüche 1 bis 3, **dadurch gekennzeichnet, dass** den im Kommunikationssystem vorgesehenen Softwareelementen (100, 200, 300; 11, 13, 14) wie z. B. Applikationen, funktionale Einheiten zur Steuerung von Geräten, Prioritätsattribute zugeordnet werden.

5. Verfahren nach Anspruch 4, **dadurch gekennzeichnet, dass** die den Softwareelementen (100, 200, 300; 11, 13, 14) zugeordneten Prioritätsattribute zumindest bezüglich ihres Prioritätsranges auch den Verbindungen zugeteilt werden.

6. Verfahren nach einem der Ansprüche 1 bis 5, **dadurch gekennzeichnet, dass** die Prioritätsattribute der Softwateelemente (100, 200, 300; 11, 13, 14) und/oder Verbindungen zusammen mit den Verbindungsdaten gespeichert werden.

7. Verfahren nach Anspruch 6, **dadurch gekennzeichnet, dass** ein übergeordnetes Softwareelement, welches insbesondere als Datenstrommanager (12, 400) arbeitet, eine Anfrage an den Speicher (13) für die Prioritätsattribute der Softwareelemente (100, 200, 300; 11, 13, 14) und/oder Verbindungen beziehungsweise Verbindungsdaten richtet, um den Wert des Prioritätsattributes des Softwareelementes zu ermitteln, welches einen Verbindungswunsch hat, und dass das übergeordnete Softwareelement/der Datenstrommanager (12, 400) anschließend Informationen über alle oder ausgewählte im Kommunikationssystem aktive Verbindungen sammelt und vom Speicher (13) deren Prioritätsattribute abfragt.

8. Verfahren nach Anspruch 7, **dadurch gekennzeichnet, dass** das übergeordnete Softwareelement/der Datenstrommanager (12, 400) anhand der Prioritätsattribute für die aktiven Verbindungen im Kommunikationssystem und dem Prioritätsattribut des Initiators des Verbindungswunsches die Verbindung/en, deren Prioritätsattribut/e niedriger ist/sind als das Prioritätsattribut des Initiators, stoppt.

9. Kommunikationssystem, insbesondere Bussystem für den Datentausch zwischen Ressourcen eines Kraftfahrzeuges, mit Systemelementen (100, 200, 300; 11, 13, 14), die Mittel aufweisen, zum Aufbau von Kommunikationsverbindungen über das Kommunikationssystem und mit einem übergeordneten Systemelement (12, 400), welches eingerichtet ist für folgende Systemfunktionen:
- zu prüfen, ob im Kommunikationssystem ausreichend Übertragungskapazität zur Verfügung steht,
- Verbindungsdaten und Prioritätsattribute von Systemelementen zu sammeln,
- Verbindungsdaten und Prioritätsattribute der Systemelemente (100, 200, 300; 11, 13, 14) daraufhin auszuwerten, ob eine gewünschte Verbindung eines Übertragungsformates mit einem vorgegebenen Prioritätsattribut aufgebaut werden kann zu Ungunsten von aktiven Verbindungen im Kommunikationssystem mit niedrigerem Prioritätsattribut, **dadurch gekennzeichnet, dass** das übergeordnete Systemelement (12, 400) eingerichtet ist, die Datenübertragung aktiver Verbindungen mit niedrigerem Prioritätsattribut temporär zu stoppen, bis eine Verbindung mit höherem Prioritätsattribut beendet ist.

## Claims

1. Method for controlling connections in a communication system, particularly a bus system, having the following steps:
- when a connection is required a message is sent (1) which contains information about the transmission format, such as bandwidth, connection type, of the required connection,
- it is ascertained whether there is sufficient transmission capacity available for this transmission format (12),
- if not, connection data and priority attributes are used to check whether there is at least one connection existing which has a lower allocated priority attribute than the required connection (5, 6),
- in the latter case the transmission of data is stopped (8) for that/those connection(s) which has/have the lower priority attribute(s), and the required connection is set up,
**characterized in that**
- the connection(s) with the lower priority attribute(s) is/are not terminated but rather the associated data transmission is merely stopped temporarily until the connection with the higher priority attribute has been terminated.

2. Method according to Claim 1, **characterized in that** after the connection with the higher priority attribute has been terminated the data transmission is continued for the stopped connection(s) with a lower priority attribute.

3. Method according to Claims 1 and 2, **characterized in that** the data which have accumulated in the period between stopping and continuing the data transmission are buffer-stored and, in particular, are transmitted first when the data transmission is continued.

4. Method according to one of Claims 1 to 3, **characterized in that** the software elements (100, 200, 300; 11, 13, 14) provided in the communication system, such as applications, functional units for controlling appliances, are allocated priority attributes.

5. Method according to Claim 4, **characterized in that** the priority attributes associated with the software elements (100, 200, 300; 11, 13, 14) are also allocated, at least in terms of their priority ranking, to the connections.

6. Method according to one of Claims 1 to 5, **characterized in that** the priority attributes of the software elements (100, 200, 300; 11, 13, 14) and/or connections are stored together with the connection data.

7. Method according to Claim 6, **characterized in that** a superordinate software element operating as a datastream manager (12, 400), in particular, sends a request to the memory (13) for the priority attributes of the software elements (100, 200, 300; 11, 13, 14) and/or connections or connection data in order to ascertain the value of the priority attribute of the software element which requires a connection, and **in that** the superordinate software element/the datastream manager (12, 400) then collects information about all or selected connections which are active in the communication system and requests their priority attributes from the memory (13).

8. Method according to Claim 7, **characterized in that** the superordinate software element/the datastream manager (12, 400) uses the priority attributes for the active connections in the communication system and the priority attribute of the initiator of the connection request to stop the connection(s) whose priority attribute(s) is/are lower than the priority attribute of the initiator.

9. Communication system, particularly a bus system for data interchange between resources in a motor vehicle, having system elements (100, 200, 300; 11, 13, 14) which have means for setting up communication connections via the communication system and having a superordinate system element (12, 400) which is set up for the following system functions:
- to check whether there is sufficient transmission capacity available in the communication system,
- to collect connection data and priority attributes from system elements,
- to evaluate connection data and priority attributes for the system elements (100, 200, 300; 11, 13, 14) to determine whether it is possible to set up a required connection with a transmission format having a prescribed priority attribute to the detriment of active connections in the communication system which have a lower priority attribute,
**characterized in that** the superordinate system element (12, 400) is set up to stop the data transmission of active connections with a lower priority attribute temporarily until a connection with a higher priority attribute has been terminated.

## Revendications

1. Procédé pour commander des liaisons dans un système de communication, notamment un système bus, présentant les étapes suivantes :
- lors d'un souhait de liaison, on émet un message (1) qui contient une information sur le format de transmission de la liaison souhaitée, par exemple la largeur de bande, le type de liaison,
- on détermine (12) si, pour ce format de transmission, on dispose d'une capacité de transmission suffisante,
- si ce n'est pas le cas, à l'aide de données de liaison et d'attributs de priorité, on détermine s'il existe au moins une liaison à laquelle est affecté un attribut de priorité plus bas qu'à la liaison demandée (5, 6),
- dans ce dernier cas, on stoppe la transmission de données pour chaque liaison (8) qui présente un (des) attribut(s) plus bas, et la liaison souhaitée est établie,
**caractérisé en ce qu'**
on ne termine pas la (les) liaison(s) qui présente(nt) un attribut plus bas mais on stoppe temporairement seulement la transmission de données correspondante, jusqu'à ce que la liaison à attribut de priorité plus élevé soit achevée.

2. Procédé selon la revendication 1,
**caractérisé en ce qu'**
après achèvement de la liaison à attribut de priorité plus élevée, on poursuit la transmission de données pour la ou les liaisons stoppées ayant un attribut de priorité plus faible.

3. Procédé selon la revendication 1 ou 2,
**caractérisé en ce que**
les données qui entrent dans l'intervalle de temps séparant l'arrêt et la poursuite de la transmission des données sont emmagasinées temporairement et, quand la transmission de données se poursuit, on les émet en particulier d'abord.

4. Procédé selon une des revendications 1 à 3,
**caractérisé en ce qu'**
on affecte des attributs de priorité aux éléments de logiciel (100, 200, 300 ; 11, 13, 14) prévus dans le système de communication tels que par exemple des applications, des unités fonctionnelles pour commander des appareils.

5. Procédé selon la revendication 4,
**caractérisé en ce qu'**
on répartit également aux liaisons les attributs de priorité affectés aux éléments de logiciel (100, 200, 300 ; 11, 13, 14) au moins en ce qui concerne leur rang de priorité.

6. Procédé selon une des revendications 1 à 5,
**caractérisé en ce que**
les attributs de priorité des éléments de logiciel (100, 200, 300 ; 11, 13, 14) et/ou des liaisons sont mémorisés avec les données de liaison.

7. Procédé selon la revendication 6,
**caractérisé en ce qu'**
un élément de logiciel subordonné fonctionnant notamment en tant que gestionnaire de débit de données (12, 400) interroge la mémoire (13) en ce qui concerne les attributs de priorité des éléments de logiciel (100, 200, 300 ; 11, 13, 14) et/ou des liaisons ou des données de liaison pour déterminer la valeur de l'attribut de priorité de l'élément de logiciel qui demande une liaison, et l'élément de logiciel du gestionnaire de débit de données (12, 400) rassemble ensuite des informations sur toutes les données ou sur les données actives sélectionnées dans le système de communication et interroge la mémoire (13) en ce qui concerne leurs attributs de priorité.

8. Procédé selon la revendication 7,
**caractérisé en ce que**
l'élément de logiciel de supervision, c'est-à-dire le gestionnaire de débit de données (12, 400) à l'aide des attributs de priorité des liaisons actives dans le système de communication et de l'attribut de priorité de l'initiateur de la demande de liaison, interrompt chaque liaison dont l'attribut de priorité est inférieur à celui de l'initiateur.

9. Système de communication, notamment système bus, pour l'échange de données entre les ressources d'un véhicule automobile, comprenant des éléments de système (100, 200, 300 ; 11, 13, 14) qui disposent de moyens pour établir des liaisons de communication par l'intermédiaire du système de communication, ainsi qu'un élément de système de supervision (12, 400), conçu pour assurer les fonctions suivantes du système :
- contrôler si le système de communication dispose d'une capacité de transmission suffisante,
- collecter les données de liaison et les attributs de priorité des éléments du système,
- à partir des données de liaison et des attributs de priorité des éléments du système (100, 200, 300 ; 11, 13, 14), évaluer si une liaison demandée d'un format de transmission avec un attribut de priorité prédéfini peut être établie au détriment des liaisons actives à attribut de priorité plus bas dans le système de communication,
**caractérisé en ce que**
l'élément de système de supervision (12, 400) subordonné est conçu pour stopper temporairement la transmission de données des liaisons actives à attributs de priorité plus bas jusqu'à achèvement de la liaison à attribut de priorité plus élevé.
